# EUROPÄISCHE PATENTSCHRIFT

(11) **EP 2 954 588 B1**
(45) Veröffentlichungstag und Bekanntmachung des Hinweises auf die Patenterteilung: **12.04.2017**
(21) Anmeldenummer: 13704715.5
(22) Anmeldetag: 07.02.2013
(51) Int. Cl.: H01M 10/0563, H01M 10/052, H01M 4/58, H01M 4/587, H01M 10/0525, H01M 10/054

(54) **ELEKTROLYT FÜR EINE ELEKTROCHEMISCHE BATTERIEZELLE UND DEN ELEKTROLYTEN ENTHALTENDE BATTERIEZELLE**
ELECTROLYTE FOR ELECTROCHEMICAL BATTERY CELL AND BATTERY CELL CONTAINING THE SAME
ÉLECTROLYTE POUR CELLULE DE BATTERIE ÉLECTROCHIMIQUE ET CELLULE DE BATTERIE CONTENANT CE DERNIER

(43) Veröffentlichungstag der Anmeldung: 16.12.2015
(73) Patentinhaber: Alevo International S.A., 1920 Martigny (CH)
(72) Erfinder: ZINCK, Laurent, F-76470 Mothern (FR); PSZOLLA, Christian, 76158 Karlsruhe (DE); DAMBACH, Claus, 76327 Pfinztal (DE)
(74) Vertreter: Durm & Partner
(86) Internationale Anmeldenummer: PCT/EP2013/000366
(87) Internationale Veröffentlichungsnummer: WO 2014/121803

(56) Entgegenhaltungen:
- WO-A2-2005/031908
- FR-A1- 2 531 574
- L. ZINCK ET AL: "Purification process for an inorganic rechargeable lithium battery and new safety concepts", JOURNAL OF APPLIED ELECTROCHEMISTRY, Bd. 36, Nr. 11, 9. August 2006 (2006-08-09), Seiten 1291-1295, XP019435138, ISSN: 1572-8838, DOI: 10.1007/S10800-006-9184-1
- I.R. HILL AND R.J. DORE: "Dehydroxylation of LiAlCl4.xSO2 electrolytes using chlorine", JOURNAL OF THE ELECTROCHEMICAL SOCIETY, Bd. 143, Nr. 11, 1. November 1996 (1996-11-01), Seiten 3585-3590, XP002590417, ISSN: 0013-4651, DOI: 10.1149/1.1837256 in der Anmeldung erwähnt

## Beschreibung

Die Erfindung betrifft einen Elektrolyten für eine elektrochemische Batteriezelle. Der Elektrolyt enthält Schwefeldioxid und ein Leitsalz. Gegenstand der Erfindung ist auch ein Verfahren zur Herstellung des Elektrolyten und eine den Elektrolyten enthaltende Batteriezelle.

Wiederaufladbare Batteriezellen sind auf vielen technischen Gebieten von großer Bedeutung. Entwicklungsziele sind insbesondere eine hohe Energiedichte (Ladungskapazität je Gewichts- und Volumeneinheit), eine hohe Strombelastbarkeit (geringer Innenwiderstand), eine hohe Lebensdauer über viele Lade- und Entladezyklen, eine sehr gute Betriebssicherheit und möglichst geringe Kosten.

Der Elektrolyt ist ein wichtiges Funktionselement jeder Batteriezelle. Er enthält ein Leitsalz und steht mit der positiven und der negativen Elektrode der Batteriezelle in Kontakt. Mindestens ein Ion des Leitsalzes (Anion oder Kation) ist in dem Elektrolyten derartig beweglich, dass durch Ionenleitung ein für die Funktion der Zelle erforderlicher Ladungstransport zwischen den Elektroden stattfinden kann.

Erfindungsgemäß wird ein auf SO₂ basierender Elektrolyt (SO₂ based electrolyte) verwendet. Mit diesem Begriff wird im Rahmen der Erfindung ein Elektrolyt bezeichnet, der Schwefeldioxid nicht als Zusatz in geringer Konzentration enthält, sondern bei dem die Beweglichkeit der Ionen des Leitsalzes, das in dem Elektrolyten enthalten ist und den Ladungstransport bewirkt, zumindest teilweise durch das SO₂ gewährleistet ist. Bevorzugt enthält der Elektrolyt mindestens 20 Gewichtsprozent ("Gew%") SO₂, wobei Werte von 35 Gew% SO₂, 45 Gew% SO₂ und 55 Gew% SO₂, jeweils bezogen auf die Gesamtmenge des in der Zelle enthaltenen Elektrolyten, in dieser Reihenfolge weiter bevorzugt sind. Der Elektrolyt kann auch bis zu 95 Gew% SO₂, enthalten, wobei Maximalwerte von 75 Gew% und 85 Gew% in dieser Reihenfolge bevorzugt sind.

Vorzugsweise wird der Elektrolyt in einer Alkalimetallzelle verwendet, bei der das aktive Metall ein Alkalimetall ist. Das aktive Metall kann aber auch ein Erdalkalimetall oder ein Metall der Gruppe 12 des Periodensystems sein. Als aktives Metall einer Batteriezelle bezeichnet man das Metall, dessen Ionen innerhalb des Elektrolyten beim Laden oder Entladen der Zelle zur negativen oder positiven Elektrode wandern und dort an elektrochemischen Prozessen teilnehmen, die direkt oder indirekt zur Abgabe von Elektronen in den externen Stromkreis oder zur Aufnahme von Elektronen aus dem externen Stromkreis führen. Bevorzugt ist das aktive Metall Lithium, Natrium, Calcium, Zink oder Aluminium, wobei Lithium besonders bevorzugt ist. Lithiumzellen mit einem auf SO₂ basierenden Elektrolyten werden als Li-SO₂-Zellen bezeichnet. Nachfolgend wird beispielhaft (aber ohne Beschränkung der Allgemeinheit) auf Lithium als aktives Metall der negativen Elektrode Bezug genommen.

Im Falle einer Alkalimetallzelle wird als Leitsalz vorzugsweise ein Tetrahalogenoaluminat, besonders bevorzugt ein Tetrachloroaluminat des Alkalimetalls, beispielsweise LiAlCl₄, verwendet. Weitere bevorzugte Leitsalze sind Aluminate, Halogenide, Oxalate, Borate, Phosphate, Arsenate und Gallate eines Alkalimetalls, insbesondere von Lithium.

Schon seit langem werden auf SO₂ basierende Elektrolyten für Lithiumzellen diskutiert. In
D1 "Handbook of Batteries", David Linden (Editor), 2. Auflage, McGraw-Hill, 1994
wird insbesondere auf die hohe ionische Leitfähigkeit eines auf SO₂ basierenden anorganischen Elektrolyten verwiesen. Auch hinsichtlich weiterer elektrischer Daten sei dieser Elektrolyt vorteilhaft. Systeme mit einem auf SO₂ basierenden Elektrolyten seien deshalb längere Zeit untersucht worden und für spezielle Anwendungen von Interesse. Die weitere kommerzielle Anwendbarkeit sei jedoch beschränkt, insbesondere weil der Elektrolyt stark korrosiv ist.

Ein Vorteil des auf SO₂ basierenden Elektrolyten ist, dass er - im Gegensatz zu den organischen Elektrolyten der in der Praxis gebräuchlichen Lithium-Ionen-Zellen - nicht brennen kann. Die bekannten Sicherheitsrisiken von Lithium-Ionen-Zellen werden insbesondere durch deren organischen Elektrolyten verursacht. Wenn eine Lithium-Ionen-Zelle Feuer fängt oder sogar explodiert, bildet das organische Lösungsmittel des Elektrolyten das brennbare Material. Ein erfindungsgemäßer Elektrolyt ist vorzugsweise im Wesentlichen frei von organischen Materialien, wobei "im Wesentlichen" dahingehend zu verstehen ist, dass die Menge eventuell vorhandener organischer Materialien so gering ist, dass sie keinerlei Sicherheitsrisiko darstellen.

Auf dieser Grundlage liegt der Erfindung das technische Problem zugrunde, einen auf SO₂ basierenden Elektrolyten zur Verfügung zu stellen, der - unter Erhaltung der vorteilhaften Eigenschaften derartiger Elektrolyten - zu verbesserten elektrischen Eigenschaften einer mit dem Elektrolyten gefüllten elektrochemischen Batteriezelle führt.

Die Aufgabe wird durch einen Elektrolyten nach Anspruch 1 gelöst. Der Gehalt des Elektrolyten an Verbindungen, die eine Hydroxidgruppe (OH⁻) enthalten, ist dabei so gering, dass die molare Konzentration von Hydroxidgruppen in dem Elektrolyten maximal 50 mmol (Millimol) pro Liter beträgt. Zugleich ist der Gehalt des Elektrolyten an Verbindungen, die eine Chlorsulfonatgruppe (SO₃Cl⁻) enthalten, so gering, dass die molare Konzentration von Chlorsulfonatgruppen in dem Elektrolyten maximal 350 mmol pro Liter beträgt.

Ein auf SO₂ basierender Elektrolyt wird üblicherweise hergestellt, indem man die Lewis-Säure-Komponente und die Lewis-Base-Komponente des Leitsalzes miteinander mischt und mit gasförmigem SO₂, das man über die Mischung oder durch diese hindurch strömen lässt, reagieren lässt. Bei der exothermen Reaktion bildet sich ein Lewis-Säure/Lewis-Base Addukt, welches in SO₂ gelöst ist, z.B.: LiCl + AlCl₃ → LiAlCl₄. Bei der Lösung des Leitsalzes in SO₂ werden dessen Ionen beweglich, beispielsweise Li⁺ und AlCl₄⁻.

Dieses Verfahren wird in der Literatur, beispielsweise in
D2 US-Patent 4 891 281 und
D3 D.L. Foster et al: "New Highly Conductive Inorganic Electrolytes", J. Electrochem. Soc., 1988, 2682 - 2686
beschrieben.

Ein bereits seit langem diskutiertes Problem besteht darin, dass bei der Herstellung des Elektrolyten Wasserspuren eingeschleppt werden, die zu Hydrolyseprodukten reagieren, wobei die Hydrolyseprodukte Hydroxidgruppen enthalten. Beispielsweise findet folgende Reaktion statt:

(A) H₂O + LiAlCl₄ → AlCl₃OH⁻ + Li⁺ + HCl

Mit diesem Problem befassen sich folgende Publikationen:
D4 US Patent 4 925 753
   Bei der hier beschriebenen Zelle dient das SO₂ zugleich als Lösemittel für das Leitsalz und als flüssige Kathode. Das Dokument beschreibt, dass Feuchtigkeit und Hydrolyseprodukte durch die Ausgangsstoffe in den Elektrolyten eingetragen werden und zu einer verstärkten Korrosion der Zellkomponenten, insbesondere der Lithium-Anode, führen. Um den Feuchtigkeitseintrag zu vermeiden, soll die eine Lewis-Komponente (Alkalimetallsalz) für 16 Stunden bei 200° Celsius getrocknet und die andere Lewis-Komponente (Aluminiumchlorid) frisch sublimiert werden. Außerdem soll die beim Betrieb der Zelle erreichbare Startkapazität dadurch vergrößert werden, dass die Konzentration an Aluminium erhöht wird (z.B. durch die Erhöhung der Konzentration an LiAlCl₄). Es wird zusätzlich ein Calciumsalz des gleichen Anions zugesetzt, das als "Gefrierschutzmittel" wirkt, also eine mit der erhöhten Konzentration des LiAlCl₄ verbundene Erhöhung der Erstarrungstemperatur des Elektrolyten kompensiert.
D5 US Patent 5 145 755
   Darin wird die Untersuchung eines gemäß D 4 hergestellten Elektrolyten mittels IR-Spektralanalyse beschrieben. Dabei zeigt sich eine starke und breite Absorptionsbande im Bereich der OH-Schwingung. Die Reinigungswirkung des in D4 beschriebenen Verfahrens ist also unzureichend. In D5 wird eine andere Methode zur Entfernung von Hydrolyseprodukten aus der Elektrolytlösung beschrieben. Dabei werden die Ausgangssalze (Lewis-Säure und Lewis-Base) gemischt und mit Sulfurylchlorid unter Rückfluss auf 90° C erhitzt. Danach wird die Salzmischung zur Entfernung des Sulfurylchlorid auf 120° C bis 150° C geschmolzen. Durch Begasen der Salzmischung mit SO₂ entsteht ein Elektrolyt, der im Wesentlichen frei von Hydrolyseprodukten sein soll.
D6 I.R. Hill und R.J. Dore: "Dehydroxylation of LiAlCl4 · xSO2 Electrolytes Using Chlorine", J. Electrochem. Soc., 143, 1996, 3585 - 3590 In dieser Publikation werden einleitend die bisherigen Versuche zur Dehydroxilierung von auf SO₂ basierenden Elektrolyten beschrieben. Es wird erläutert, dass ein wesentlicher Nachteil dieses Elektrolyt-Typs darin besteht, dass er normalerweise Hydroxid-Verunreinigungen enthält und dass die bisherigen Versuche zur Beseitigung dieser Verunreinigungen unzureichend waren. Aus der Tatsache, dass die erforderliche Dehydroxilierung nicht durch Erhitzen bewirkt werden kann, schließen die Autoren, dass eine chemische Behandlung erforderlich ist. An der in D5 beschriebenen Dehydroxilierung mittels Sulfurylchlorid kritisieren sie, dass eine Rekontamination mit Wasser stattfinden kann, wenn mittels des gereinigten Salzes der Elektrolyt hergestellt wird. Deswegen sei eine Dehydroxilierung des LiAlCl₄ · xSO₂ Elektrolyten vorzuziehen. Diesbezüglich werden in dem Dokument zwei Verfahren verglichen, bei denen der Elektrolyt mit Sulfurylchlorid (SO₂Cl₂) bzw. Chlorgas (Cl₂) behandelt wird. Mit beiden Verfahren könne eine ausreichende Dehydroxilierung erreicht werden, wobei das Chlorgas-Verfahren als bevorzugt angesehen wird. Wie sich aus den in dem Dokument dargestellten IR-Spektren ergibt, entstehen bei beiden Verfahren Chlorsulfonatgruppen, die die Hydroxidgruppen ersetzen. Die elektrochemische Aktivität der Chlorsulfonatgruppen wird durch Beobachtung der Intensität der entsprechenden Infrarotbanden beim extensiven Entladen der Zelle untersucht. Es wird festgestellt, dass dabei die Intensität der Banden nicht abnimmt und demzufolge die Chlorsulfonatgruppen an den Zellreaktionen nicht teilnehmen.

Im Rahmen der Erfindung wurde festgestellt, dass das bei den bekannten Verfahren zur Entfernung von hydroxidhaltigen Verbindungen zwangsläufig gebildete (SO₃Cl)⁻ die Funktion der Zelle wesentlich beeinträchtigt und deswegen eine erhebliche Verbesserung, insbesondere hinsichtlich der Ladekapazität der Zelle und ihrer Verwendbarkeit über eine große Zahl von Lade- und Entladezyklen, erreicht wird, wenn nicht nur die molare Konzentration (auch bezeichnet als Stoffmengenkonzentration) von Hydroxidgruppen in dem Elektrolyten unter 50 mmol pro Liter liegt, sondern zugleich auch die molare Konzentration von Chlorsulfonatgruppen in dem Elektrolyten einen Maximalwert von 350 mmol pro Liter nicht überschreitet. Besonders gute Ergebnisse werden erreicht, wenn die molare Konzentration von Hydroxidgruppen in dem Elektrolyten maximal 45 mmol pro Liter, bevorzugt maximal 25 mmol pro Liter, weiter bevorzugt maximal 15 mmol pro Liter und besonders bevorzugt maximal 5 mmol pro Liter beträgt. Hinsichtlich der molaren Konzentration von Chlorsulfonatgruppen in dem Elektrolyten ist es besonders vorteilhaft, wenn ihr Maximalwert 250 mmol pro Liter, bevorzugt 200 mmol pro Liter und besonders bevorzugt 100 mmol pro Liter nicht übersteigt.

Hydroxidgruppen können, wie bereits beschrieben, durch den Eintrag von Wasserspuren in die Ausgangsstoffe der Elektrolytherstellung oder in den Elektrolyten selbst entstehen. Das Wasser kann gemäß Reaktionsgleichung (A) mit dem Elektrolyten unter Bildung der hydroxidhaltigen Verbindung AlCl₃OH⁻ reagieren. Es können aber auch andere hydroxidhaltige Verbindungen entstehen. Alle hydroxidhaltigen Verbindungen können mittels Infrarot-Spektroskopie anhand der OH-Schwingung bei einer Wellenzahl von etwa 3350 cm⁻¹ nachgewiesen werden. Im Gegensatz zur Infrarot-Spektroskopie ist die zur Analytik von Wasserspuren bekannte Karl-Fischer-Methode nicht zur Bestimmung von hydroxidhaltigen Verbindungen im Elektrolyten geeignet. Mit der Karl-Fischer-Methode werden neben hydroxidhaltigen Verbindungen wir z.B. AlCl₃OH⁻, auch oxidhaltige Verbindungen des Elektrolyten, wie z.B. AIOCI, erfasst. Ein hoher Karl-Fischer-Wert ist also nicht gleichzusetzen mit einer hohen Konzentration an hydroxidhaltigen Verbindungen.

Verbindungen, die Chlorsulfonatgruppen enthalten, entstehen beispielsweise bei der Reaktion von Chlor mit hydroxidhaltigen Verbindungen der Elektrolytlösung gemäß

(B) AlCl₃OH⁻ + Cl₂ + SO₂ → AlCl₃(SO₃Cl)⁻ + HCl

Verbindungen, die Chlorsulfonatgruppen enthalten, können in dem Elektrolyten mittels Infrarot-Spektroskopie detektiert werden. Drei Banden bei Wellenzahlen von etwa 665 cm⁻¹, 1070 cm⁻¹ und 1215 cm⁻¹ sind charakteristisch für das Vorhandensein von Verbindungen mit Chlorsulfonatgruppen.

Bevorzugte gewichtsmäßige Anteile des SO₂ an der Gesamtmenge des in der Zelle enthaltenen Elektrolyten wurden bereits angegeben. Der Gewichtsanteil des Leitsalzes in dem Elektrolyten sollte vorzugsweise weniger als 70 % betragen, wobei Werte von weniger als 60, 50, 40, 30, 20 und 10 Gew% in dieser Reihenfolge weiter bevorzugt sind.

Der Elektrolyt sollte vorzugsweise überwiegend aus dem SO₂ und dem Leitsalz bestehen. Vorzugsweise sollte der Gewichtsanteil von SO₂ plus Leitsalz, bezogen auf das Gesamtgewicht des Elektrolyten in der Zelle, mehr als 50 Gew% betragen, wobei Werte von mehr als 60, 70, 80, 85, 90, 95 und 99 % in dieser Reihenfolge besonders bevorzugt sind.

In dem Elektrolyten können mehrere unterschiedliche Salze derartig gelöst sein, dass mindestens eines ihrer Ionen in dem Elektrolyten beweglich ist und durch Ionenleitung zu dem für die Funktion der Zelle erforderlichen Ladungstransport beiträgt, so dass das Salz als Leitsalz wirkt. Vorzugsweise überwiegt dabei der Anteil von Salzen, deren Kation das Kation des aktiven Metalls ist. Bezogen auf die Stoffmenge (Molzahl; englisch: mole number) aller in dem Elektrolyten gelösten Salze sollte der Stoffmengenanteil (mole fraction) an gelösten Salzen mit einem von dem Kation des aktiven Metalls verschiedenen Kation in dem Elektrolyten maximal 30 mol% betragen, wobei Werte von maximal 20 mol%, 10 mol%, 5 mol% und 1 mol% in dieser Reihenfolge weiter bevorzugt sind.

Hinsichtlich der molaren Relation von Leitsalz und Schwefeldioxid ist es bevorzugt, dass der Elektrolyt mindestens 1 Mol SO₂ je Mol Leitsalz enthält, wobei 2, 3, 4 und 6 Mol SO₂ je Mol Leitsalz in dieser Reihenfolge weiter bevorzugt sind. Es sind sehr hohe molare Anteile an SO₂ möglich, wobei der bevorzugte obere Grenzwert mit 50 Mol SO₂ je Mol Leitsalz angegeben werden kann und Obergrenzen von 25 und 10 Mol SO₂ je Mol Leitsalz in dieser Reihenfolge weiter bevorzugt sind.

Wie oben erläutert ist der erfindungsgemäße Elektrolyt vorzugsweise im Wesentlichen frei von organischen Materialien. Dies schließt jedoch nicht aus, dass bei manchen Ausführungsformen der Erfindung auch organische Materialien, beispielsweise ein oder mehrere organische CO-Lösungsmittel in dem Elektrolyten enthalten sind. Bei einer derartigen Ausführungsform sollte jedoch die Gesamtmenge des organischen Materials in dem Elektrolyten jedenfalls weniger als 50 Gew% betragen, wobei Werte von weniger als 40, 30, 20, 15, 10, 5, 1 und 0,5 Gew%, bezogen auf das Gesamtgewicht des Elektrolyten, in dieser Reihenfolge weiter bevorzugt sind. Gemäß einer weiteren bevorzugten Ausführungsform hat das organische Material einen Flammpunkt (flash point) von weniger als 200° C, wobei Werte von 150, 100, 50, 25 und 10° C in dieser Reihenfolge weiter bevorzugt sind.

Gemäß einer weiteren bevorzugten Ausführungsform enthält der Elektrolyt zwei oder mehr organische Materialien, wobei die organischen Materialien insgesamt einen durchschnittlichen (aus der Gewichtsrelation errechneten) Flammpunkt von weniger als 200° C haben, wobei Werte von 150, 100, 50, 25 und 10° C in dieser Reihenfolge weiter bevorzugt sind.

Ein zur Herstellung des erfindungsgemäßen Elektrolyten geeignetes Verfahren zeichnet sich durch folgende Schritte aus:
- Eine Lewis-Säure, eine Lewis-Base und Aluminium werden in fester Form gemischt.
- Die Mischung wird für eine Mindestdauer von 6 Stunden auf einer Temperatur oberhalb einer Mindesttemperatur gehalten, wobei die Mindesttemperatur oberhalb des Schmelzpunktes der Mischung liegt, mindestens jedoch 200° C beträgt. Dabei bildet sich ein Addukt der Lewis-Säure und der Lewis-Base.

Die Mindesttemperatur beträgt vorzugsweise 250° C, wobei Werte von 300° C, 350° C, 400° C, 450° C und 500° C in dieser Reihenfolge besonders bevorzugt sind. Die Mindestdauer beträgt vorzugsweise 12 Stunden, wobei Werte von 18, 24, 48 und 72 Stunden in dieser Reihenfolge besonders bevorzugt sind.

Der Anteil des Aluminium in der Ausgangsmischung sollte mindestens 40 mmol Aluminium pro Mol der Lewis-Säure betragen, wobei Werte von 200 und 400 mmol pro Mol Lewis-Säure in dieser Reihenfolge weiter bevorzugt sind.

Die Lewis-Säure ist vorzugsweise AlCl₃. Die Lewis-Base ist vorzugsweise ein Chlorid des Leitsalzes, im Falle einer Lithiumzelle also LiCl.

Die Ausgangssubstanzen werden vorzugsweise partikelförmig eingesetzt und vor dem Erhitzen gut durchmischt. Die Temperaturerhöhung sollte langsam erfolgen, insbesondere um einen raschen Druckanstieg zu vermeiden. Zum Ausgleich eines eventuellen Anstieges des Gasdrucks sollte das Reaktionsgefäß zumindest zu Beginn des Aufheizvorganges offen sein, wobei der ungewünschte Zutritt von Fremdgasen zweckmäßigerweise dadurch vermieden wird, dass ein Vakuum angelegt oder ein Flüssigkeitsverschluss, ähnlich einer Waschflasche, verwendet wird. Es kann zweckmäßig sein, am Ende des Verfahrens durch Filtrieren (beispielsweise mit Hilfe eines Glasfaser-Filtertuches) feste Verunreinigungen, insbesondere Aluminium, zu entfernen. Das Filtrieren sollte bei einer Temperatur erfolgen, bei der die Schmelze ausreichend flüssig ist, um den Filter zu passieren. Andererseits sollte die Temperatur niedrig genug sein, um eine Beschädigung des Filters und eventuell damit verbundene Verunreinigung der Schmelze zu vermeiden. In der Praxis hat sich eine Temperatur von 250° C als geeignet erwiesen.

Die Erfindung wird nachfolgend anhand von Figuren, Ausführungsbeispielen und experimentellen Ergebnissen näher erläutert. Die dabei beschriebenen Besonderheiten können einzeln oder in Kombination verwendet werden, um bevorzugte Ausgestaltungen der Erfindung zu schaffen. Es zeigen:
- Figur 1: eine Querschnittsdarstellung einer erfindungsgemäßen Batteriezelle;
- Figur 2: FTIR-Spektren (Transmission) von Kalibrations-Elektrolytlösungen mit fünf verschiedenen molaren Konzentrationen von Hydroxidgruppen;
- Figur 3: FTIR-Spektren (Transmission) von Elektrolyten mit unterschiedlichen molaren Konzentrationen von Hydroxidgruppen;
- Figur 4: eine grafische Darstellung der Abhängigkeit der Zykelzahl, bei der eine Entladekapazität von 66,5 % der Nennkapazität bei Zellen erreicht ist, die eine unterschiedliche molare Konzentration von Hydroxidgruppen enthalten;
- Figur 5: eine grafische Darstellung der zur Deckschichtbildung auf den Elektroden irreversibel verbrauchten Kapazität für Zellen mit unterschiedlichen molaren Konzentrationen an Hydroxidgruppen;
- Figur 6: eine grafische Darstellung der Entladekapazität in Abhängigkeit von der Zykelzahl von zwei Zellen mit einer unterschiedlichen molaren Konzentration von Hydroxidgruppen in dem Elektrolyten;
- Figur 7: ein FTIR-Spektrum (ATR) zweier Elektrolyten, die eine unterschiedliche molare Konzentration von Chlorsulfonatgruppen enthalten;
- Figur 8: eine grafische Darstellung des Verhältnisses der Deckschichtkapazität und der Entladekapazität für Zellen mit einer unterschiedlichen molaren Konzentration von Chlorsulfonatgruppen in ihrem Elektrolyten.

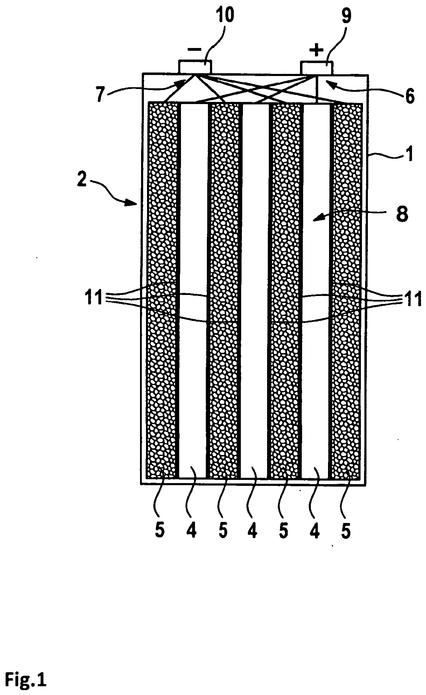

Das Gehäuse 1 der in Figur 1 dargestellten wiederaufladbaren Batteriezelle 2 umschließt eine Elektrodenanordnung, die mehrere (im dargestellten Fall drei) positive Elektroden 4 und mehrere (im dargestellten Fall vier) negative Elektroden 5 einschließt. Die Elektroden 4, 5 sind, wie üblich, über Elektrodenanschlüsse 6, 7 mit entsprechenden Anschlusskontakten 9, 10 der Batterie verbunden. Die Zelle ist derartig mit einem auf SO₂ basierenden Elektrolyten 8 gefüllt, dass der Elektrolyt möglichst vollständig in sämtliche Poren, insbesondere innerhalb der Elektroden 4, 5, eindringt. Der Elektrolyt kann flüssig oder gelförmig sein.

Die Elektroden 4, 5 sind in üblicher Weise flächig ausgebildet, d.h. als Schichten mit einem im Verhältnis zu ihrer Flächenausdehnung geringen Dicke. Die Elektroden 4, 5 weisen, wie üblich, ein Ableitelement auf, das aus Metall besteht und dazu dient, den erforderlichen elektronisch leitenden Anschluss des aktiven Materials der jeweiligen Elektrode zu ermöglichen. Das Ableitelement steht in Kontakt zu dem an der Elektrodenreaktion der jeweiligen Elektrode beteiligten aktiven Material. Die Elektroden sind jeweils durch Separatoren 11 voneinander getrennt. Das Gehäuse 1 der dargestellten prismatischen Zelle ist im Wesentlichen quaderförmig, wobei sich die Elektroden und die im Querschnitt der Figur 1 dargestellten Wände senkrecht zu der Zeichenebene erstrecken und im Wesentlichen gerade und eben verlaufen. Die erfindungsgemäße Zelle kann jedoch auch als Wickelzelle ausgebildet sein.

Die negativen Elektroden 5 sind vorzugsweise Insertionselektroden, sie bestehen also aus einem Elektrodenmaterial, in welches die Ionen des aktiven Metalls während des Ladens der Zelle eingelagert und während des Entladens der Zelle ausgelagert werden. Vorzugsweise enthalten sie Kohlenstoff.

Als aktive Masse der positiven Elektrode wird eine Komponente der Zelle bezeichnet, die bei der an der positiven Elektrode ablaufenden Redoxreaktion ihren Ladungszustand ändert. Bei den erfindungsgemäßen Zellen liegt die aktive Masse der positiven Elektrode bevorzugt als Interkalationsverbindung vor, in die das aktive Metall eingelagert werden kann. Insbesondere eignen sich Metallverbindungen (beispielsweise Oxide, Halogenide, Phosphate, Sulfide, Chalkogenide, Selenide), wobei insbesondere Verbindungen eines Übergangsmetalls, besonders eines Elementes der Ordnungszahlen 22 bis 28, insbesondere Kobalt, Nickel, Mangan oder Eisen, einschließlich Mischoxiden und anderen Mischverbindungen der Metalle, geeignet sind. Lithiumeisenphosphat ist besonders bevorzugt. Beim Entladen einer solchen Zelle werden Ionen des aktiven Metalls in die positive aktive Masse eingelagert. Aus Gründen der Ladungsneutralität führt dies zu einer Elektrodenreaktion der positiven aktiven Masse an der Elektrode, bei der ein Elektron von einem Ableitelement der Elektrode in die positive aktive Masse übertritt. Beim Laden findet der umgekehrte Prozess statt: Das aktive Metall (beispielsweise Lithium) wird als Ion aus der positiven aktiven Masse ausgelagert, wobei ein Elektron von dieser in das Ableitelement der positiven Elektrode übertritt.

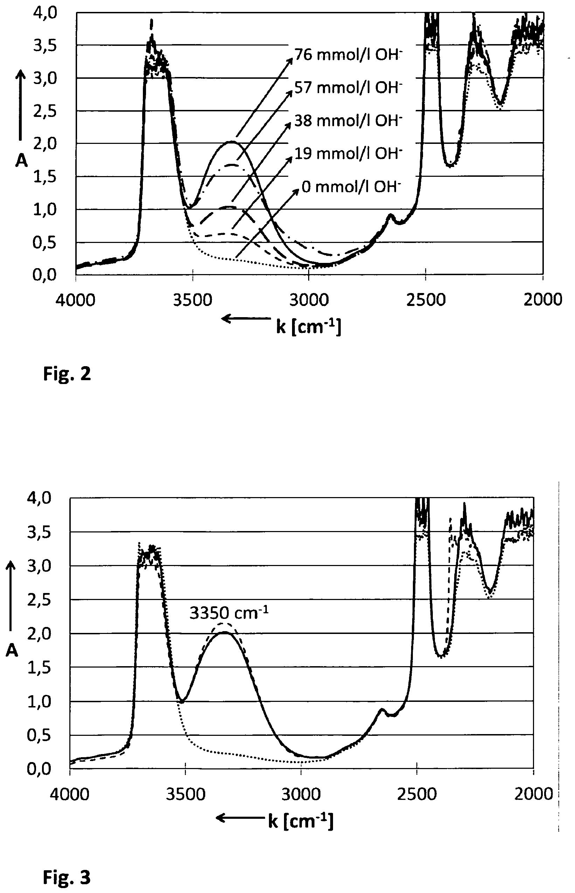

Die Figuren 2 bis 8 basieren auf der experimentellen Erprobung der Erfindung.

Figur 2 zeigt FTIR-Spektren von Kalibrationslösungen mit unterschiedlichen molaren Konzentrationen an Hydroxidgruppen. Dargestellt ist die Absorbanz A in Abhängigkeit von der Wellenzahl k.

Geeignete Kalibrationslösungen lassen sich zum Beispiel herstellen, indem man zu einem Elektrolyten, der keine OH-Absorptionsbande zeigt, also keine Hydroxidgruppen enthält, eine definierte Menge Lithiumchlorid-Monohydrat hinzufügt. Die Zugabe von 0,0604 g Lithiumchlorid-Monohydrat erhöht den Wassergehalt, somit auch den Gehalt an Hydroxidgruppen des Kalibrationselektrolyten, um 1 mmol.

Kalibrationselektrolyte mit verschiedenen molaren Konzentrationen an Hydroxidgruppen wurden mittels FTIR-Spektroskopie im Bereich der Absorptionsbande von OH⁻ (3300 cm⁻¹) untersucht. In Figur 2 sind die Spektren für die fünf in der Grafik genannten molaren Konzentrationen von Hydroxidgruppen dargestellt.

Figur 3 zeigt eine der Figur 2 entsprechende Darstellung, wobei neben den Kalibrationskurven für die molaren Hydroxidkonzentrationen null (gepunktet) und 76 mmol pro Liter (durchgezogener Strich) das FTIR-Spektrum eines Elektrolyten dargestellt ist (gestrichelte Linie), der gemäß den Anweisungen des oben zitierten Dokumentes D3 hergestellt wurde. Das Spektrum zeigt, dass der nach diesem Stand der Technik hergestellte Elektrolyt etwa 94 mmol pro Liter (entspricht ca. 1000 ppm) an Hydroxidgruppen enthielt. Auch in dem oben zitierten Dokument D6 wird berichtet, dass ein nicht gereinigter Elektrolyt eine Hydroxidmenge enthält, die dieser molaren Konzentration entspricht.

Hydroxidhaltige Verbindungen wirken sich nachteilig auf die elektrochemischen Eigenschaften einer Batteriezelle aus. Die Entladekapazität Q_{D} gibt an, welche Kapazität einer Batteriezelle beim Entladen entnommen werden kann. Im Allgemeinen nimmt Q_{D} beim Laden und Entladen von Zyklus zu Zyklus ab. Je geringer diese Abnahme ist, desto höher ist die Lebensdauer der Batterie.

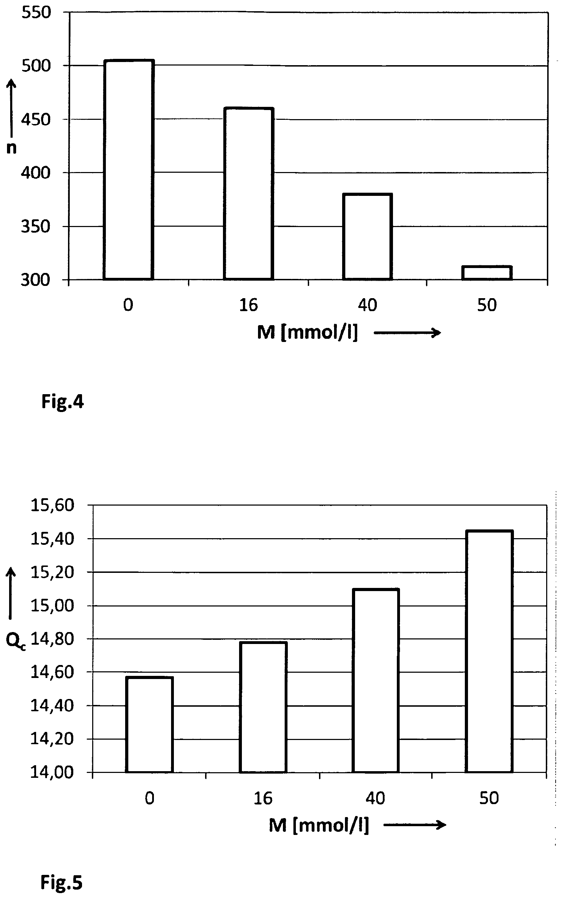

Figur 4 verdeutlicht den Einfluss der molaren Konzentration von Hydroxidgruppen auf die Kapazitätsabnahme und damit auf die Lebensdauer der Batteriezelle. Der Grafik liegt ein Experiment zugrunde, bei dem Batteriezellen mit zwei negativen Kohlenstoffelektroden, einem auf SO₂ basierenden Elektrolyten mit LiAlCl₄ als Leitsalz und einer positiven Elektroden mit Lithiumeisenphosphat über mehrere hundert Zyklen ge- und entladen wurden. Die Nennkapazität der Zelle betrug 100 mAh. Das Laden der Zellen erfolgte mit 1 C, entsprechend einem Strom von 100 mA bis zu einer Ladeschlussspannung von 3,6 Volt und einem Abfall des Ladestromes auf 40 mA. Danach wurden die Zellen mit der gleichen Stromstärke bis zum Erreichen eines Potentials von 2,5 V entladen. Zwischen dem Laden und dem Entladen wurde jeweils eine Pause von zehn Minuten eingelegt.

In Figur 4 dargestellt ist die Anzahl der Lade- und Entladezyklen, die mit den Versuchszellen bis zum Erreichen einer definierten Minimalkapazität (hier 66,5 % der Nennkapazität) durchgeführt werden konnten. Die hydroxidfreie Zelle, auf die sich die linke Säule bezieht, erreichte diesen Wert erst bei 500 Zyklen. Im Gegensatz erreichten die weiteren Zellen mit einem Hydroxidgehalt von 19, 40 und 50 mmol/l wesentlich geringere Zykelzahlen, wobei die Zelle mit einem Hydroxidgehalt von 50 mmol/l nur ca. 300 mal gezykelt werden konnte. Nimmt man beispielsweise an, dass eine Batteriezelle täglich einmal geladen und entladen wird und bis zu der spezifizierten Entladekapazität verwendet werden soll, hat die hydroxidfreie Zelle eine Lebensdauer von 1 Jahr und 7 Monaten, während die Zelle mit einem Hydroxidgehalt von 50 mmol/l nur 10 Monate lang benutzt werden kann.

Wie bereits erläutert, führen in dem Elektrolyten einer elektrochemischen Zelle enthaltene Hydroxidgruppen auch insofern zu einer Verschlechterung von deren elektrischen Daten, als die in den ersten Ladezyklen für die Bildung einer Elektrodendeckschicht irreversibel verbrauchte Ladungsmenge ("Deckschichtkapazität" Q_{C}) in Abhängigkeit von der molaren Konzentration an Hydroxidionen zunimmt. Die Deckschichtkapazität Q_{C} lässt sich beispielsweise durch den Vergleich der Lade- bzw. Entladekapazitäten der Zelle im ersten Zyklus bestimmen. Figur 5 zeigt die Ergebnisse solcher Experimente. Dargestellt ist die Deckschichtkapazität Q_{C} (in Prozent der theoretischen Ladekapazität der negativen Elektrode) in Abhängigkeit von der in vier verschiedenen Elektrolyten enthaltenen molaren Konzentration M an Hydroxidionen. Man erkennt, dass die Deckschichtkapazität für eine Zelle mit 50 mmol/l höher ist als bei einer Zelle, deren Elektrolyt keine Hydroxidionen enthält. Entsprechend höher ist die nutzbare Entladekapazität bei Zellen, die kein Hydroxid enthalten.

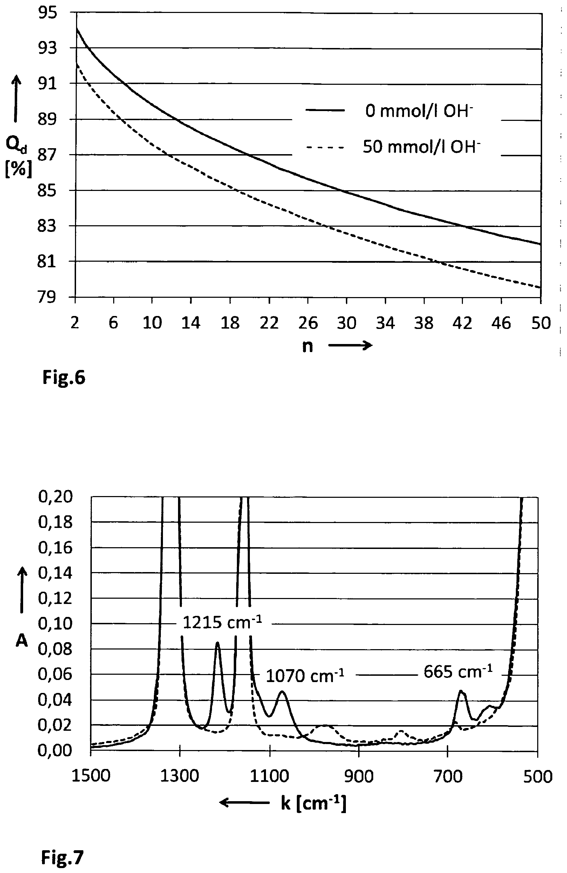

Der Effekt ist erheblich, weil bei einer hydroxidhaltigen Zelle auch alle folgenden Lade- und Entladezyklen auf einem entsprechend niedrigeren Niveau beginnen als bei hydroxidfreien Zellen. In Figur 6 ist die Entladekapazität Q_{D} in Prozent der Nennkapazität in Abhängigkeit von der Zahl der Lade- und Entladezyklen dargestellt, wobei die durchgezogene Kurve die Ergebnisse mit einem hydroxidfreien Elektrolyten und die gestrichelte Kurve die Ergebnisse für einen Elektrolyten mit einer molaren Konzentration von 50 mmol/l an Hydroxidgruppen zeigt.

Wie oben dargelegt, wurden in der Vergangenheit verschiedene Verfahren erprobt, um hydroxidhaltige Verunreinigungen des Elektrolyten zu entfernen und die damit verbundenen Nachteile zu beseitigen. Dabei wurde festgestellt, dass die gewünschte Reinigungswirkung nicht durch Verwendung getrockneter Ausgangssubstanzen und/oder Erhitzen des Elektrolyten erreicht werden kann. Deswegen wurden chemische Verfahren mit Hilfe von Chlor oder chlorhaltigen Substanzen vorgeschlagen (vgl. D5 und D6). Im Rahmen der Erfindung wurde jedoch festgestellt, dass die mit derartigen Verfahren verbundene Bildung von Chorsulfonatgruppen in dem Elektrolyten zusätzliche Probleme verursacht.

In Figur 7 ist das FTIR-Spektrum (ATR) als Absorbanz A in Abhängigkeit von der Wellenzahl k für zwei Elektrolytlösungen dargestellt, die keine (gestrichelte Linie) bzw. 290 mmol/l (durchgezogene Linie) an Sulfonatgruppen enthielten. Deutlich sind drei Banden bei den Wellenzahlen 665 cm⁻¹, 1070 cm⁻¹ und 1215 cm⁻¹ zu erkennen, die beim Vorhandensein von Verbindungen, welche Chlorsulfonatgruppen enthalten, auftreten.

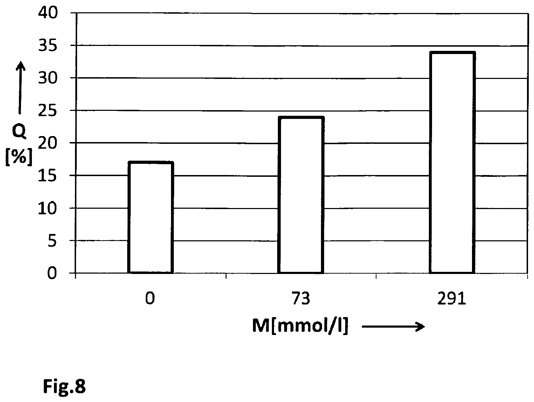

Figur 8 zeigt die Deckschichtkapazität Q_{C} für Zellen, deren Elektrolyt drei verschiedene molare Konzentrationen an Chlorsulfonatgruppen enthielt. Diese Messungen wurden als Halbzellenexperimente in einem Drei-ElektrodenSystem durchgeführt (Arbeitselektrode: Kohlenstoff (Graphit); Gegenelektrode: Lithium; Referenzelektrode zur stromlosen Messung des Potentials: Lithium). Die Elektroden wurden in einer gläsernen E-Zelle angeordnet und mit der jeweils zu untersuchenden Elektrolytlösung gefüllt. Die linke Säule zeigt das Beispiel einer Zelle mit einem erfindungsgemäßen Elektrolyten, der nicht nur im Wesentlichen frei von Hydroxidgruppen, sondern auch im Wesentlichen frei von Chlorsulfonatgruppen war. Hier beträgt die Deckschichtkapazität nur 17 %. Die beiden anderen Säulen zeigen die Ergebnisse für Zellen mit 73 mmol/l und 291 mmol/l Chlorsulfonatgruppen. Je höher die Deckschichtkapazität ist, desto geringer wird die Entladekapazität. Das bedeutet, dass durch den Chlorsulfonat-Gehalt das prozentuale Verhältnis zwischen der (irreversibel und damit nutzlos verbrauchten) Deckschichtkapazität Qc und der nutzbaren Entladekapazität Q_{D} wesentlich schlechter wird.

Ein erfindungsgemäßer Elektrolyt lässt sich beispielsweise mit folgendem Verfahren herstellen:
a) Trocknen: Lithiumchlorid wird unter Vakuum bei 120° C für drei Tage getrocknet. Aluminiumpartikel werden unter Vakuum für zwei Tage bei 450° C getrocknet.
b) Mischen: 434 g (10,3 mol) LiCl, 1.300 g (9,7 mol) AlCl₃ und 100 g (3,4 mol) Al werden in einer Glasfasche mit einer Öffnung, die den Austritt von Gas ermöglicht, gut gemischt. Dies entspricht einem Molverhältnis AlCl₃:LiCl:Al von 1:1,06:0,35.
c) Schmelzen/Wärmebehandlung: Die Mischung wird wie folgt wärmebehandelt:
   - Zwei Stunden bei 250° C;
   - zwei Stunden bei 350°C;
   - zwei Stunden bei 500° C;
   - nach 6 Stunden wird die Öffnung der Flasche geschlossen;
   - drei Tage bei 500° C;
d) Abkühlen/Filtern: Nach Abkühlen auf 250° C wird die Schmelze durch ein Glasfasertuch gefiltert.
e) Zuführung von SO₂: Nach einem Tag wird die Schmelze auf Raumtemperatur abgekühlt. Die Flasche mit der Schmelze wird evakuiert. SO₂ wird aus einem Behälter, der SO₂ Gas unter Druck enthält, zugeführt bis das gewünschte molare Verhältnis von SO₂ zu LiAlCl₄ resultiert. Dies kann durch Wiegen überprüft werden. Die Flasche wird während der Zuführung des SO₂ abgekühlt, wobei die Salzschmelze sich in dem SO₂ löst und ein erfindungsgemäßer flüssiger Elektrolyt resultiert.

Bei dem beschriebenen Verfahren wird ein Addukt der Lewis-Base LiCl und der Lewis-Säure AlCl₃ gebildet. Der Überschuss an LiCl führt dazu, dass in dem Elektrolyten freies LiCl enthalten ist. Dadurch wird die Bildung von freiem AlCl₃ verhindert. Generell, unabhängig von dem genannten Beispiel, ist es vorteilhaft, wenn der Elektrolyt freie Lewis-Base zusätzlich zu dem Lewis-Säure/Lewis-Base Addukt enthält. Anders gedrückt, sollte das Mol-Verhältnis von der Summe der freien Lewis-Base und der im Lewis-Säure/Lewis-Base Addukt enthaltenen Lewis-Base zu der im Lewis-Säure/Lewis-Base Addukt enthaltenen Lewis-Säure größer 1 sein.

## Patentansprüche

1. Elektrolyt für eine elektrochemische Batteriezelle, enthaltend Schwefeldioxid und ein Leitsalz, **dadurch gekennzeichnet, dass**
die molare Konzentration von Hydroxidgruppen in dem Elektrolyten maximal 50 mmol pro Liter beträgt, und
die molare Konzentration von Chlorsulfonatgruppen in dem Elektrolyten maximal 350 mmol pro Liter beträgt.

2. Elektrolyt nach Anspruch 1, **dadurch gekennzeichnet, dass** die molare Konzentration von Hydroxidgruppen in dem Elektrolyt maximal 45 mmol pro Liter, bevorzugt maximal 25 mmol pro Liter, weiter bevorzugt maximal 15 mmol pro Liter und besonders bevorzugt maximal 5 mmol pro Liter beträgt.

3. Elektrolyt nach Anspruch 1, **dadurch gekennzeichnet, dass** die molare Konzentration von Chlorsulfonatgruppen in dem Elektrolyt maximal 250 mmol pro Liter, bevorzugt maximal 200 mmol pro Liter und besonders bevorzugt maximal 100 mmol pro Liter beträgt.

4. Elektrolyt nach einem der vorhergehenden Ansprüche, **dadurch gekennzeichnet, dass** der Elektrolyt mindestens 1 Mol SO₂, bevorzugt mindestens 2 Mol SO₂, weiter bevorzugt mindestens 3 Mol SO₂, noch weiter bevorzugt mindestens 4 Mol SO₂ und besonders bevorzugt mindestens 6 Mol SO₂ je Mol Leitsalz enthält.

5. Elektrolyt nach einem der vorhergehenden Ansprüche, **dadurch gekennzeichnet, dass** das Leitsalz ein Lewis-Säure/Lewis-Base Addukt ist und der Elektrolyt freie Lewis-Base enthält.

6. Elektrolyt nach einem der vorhergehenden Ansprüche, **dadurch gekennzeichnet, dass** das Leitsalz ein Aluminat, Halogenid, Oxalat, Borat, Phosphat, Arsenat oder Gallat eines Alkalimetalls, insbesondere von Lithium, bevorzugt ein Lithiumtetrahalogenoaluminat, besonders bevorzugt Lithiumtetrachloroaluminat ist.

7. Elektrolyt nach einem der vorherigen Ansprüche, **dadurch gekennzeichnet, dass** er, bezogen auf die Stoffmenge aller in dem Elektrolyten gelösten Salze, maximal 30 mol%, bevorzugt maximal 20 mol%, weiter bevorzugt maximal 10 mol% und besonders bevorzugt maximal 1 mol% an gelöstem Salz mit einem von dem Kation des aktiven Metalls verschiedenen Kation enthält.

8. Elektrochemische Batteriezelle, enthaltend einen Elektrolyt nach einem der hervorgehenden Ansprüche, eine positive Elektrode und eine negative Elektrode.

9. Batteriezelle nach Anspruch 8, **dadurch gekennzeichnet, dass** das aktive Metall ein Alkalimetall, ein Erdalkalimetall oder ein Metall der Gruppe 12 des Periodensystems oder Aluminium oder bevorzugt Lithium, Natrium, Calcium oder Zink ist.

10. Batteriezelle nach Anspruch 8 oder 9, **dadurch gekennzeichnet, dass** die negative Elektrode eine Insertionselektrode ist und bevorzugt Kohlenstoff enthält.

11. Batteriezelle nach einem der vorhergehenden Ansprüche, **dadurch gekennzeichnet, dass** die positive Elektrode eine Metallverbindung, vorzugsweise ein Metalloxid oder ein Metallhalogenid oder ein Metallphosphat enthält, wobei das Metall vorzugsweise ein Übergangsmetall der Ordnungszahlen 22 bis 28, insbesondere Kobalt, Nickel, Mangan oder Eisen ist, wobei die positive Elektrode vorzugsweise eine Interkalationsverbindung enthält, die vorzugsweise Lithiumeisenphosphat enthält.

12. Verfahren zur Herstellung eines Elektrolyten nach einem der Ansprüche 1 bis 8, wobei
eine Lewis-Säure, eine Lewis-Base und Aluminium gemischt werden, und
die Mischung für eine Mindestdauer von 6 Stunden auf eine Temperatur oberhalb einer Mindesttemperatur erhitzt wird, die mindestens 200° C beträgt und oberhalb des Schmelzpunktes der Mischung liegt, wobei sich ein Addukt der Lewis-Säure und der Lewis-Base bildet.

13. Verfahren nach Anspruch 12, **dadurch gekennzeichnet, dass** die Mindesttemperatur 250° C, bevorzugt 300° C, weiter bevorzugt 350° C, weiter bevorzugt 400° C, weiter bevorzugt 450° C und besonders bevorzugt 500° C beträgt.

14. Verfahren nach einem der Ansprüche 12 oder 13, **dadurch gekennzeichnet, dass** die Mindestdauer 12 Stunden, bevorzugt 18 Stunden, weiter bevorzugt 24 Stunden, weiter bevorzugt 48 Stunden und besonders bevorzugt 72 Stunden beträgt.

15. Verfahren nach einem der Ansprüche 12 bis 14, **dadurch gekennzeichnet, dass** die Mischung je Mol Lewis-Säure mindestens 40 mmol, bevorzugt mindestens 200 mmol und besonders bevorzugt mindestens 400 mmol Aluminium enthält.

## Claims

1. Electrolyte for an electrochemical battery cell, containing sulfur dioxide and a conductive salt, **characterized in that**
the molar concentration of hydroxide groups in the electrolyte is at most 50 mmol per liter, and that
the molar concentration of chlorosulfonate groups in the electrolyte is at most 350 mmol per liter.

2. Electrolyte according to claim 1, **characterized in that** the molar concentration of hydroxide groups in the electrolyte is at most 45 mmol per liter, preferably at most 25 mmol per liter, further preferably at most 15 mmol per liter and particularly preferably at most 5 mmol per liter.

3. Electrolyte according to claim 1, **characterized in that** the molar concentration of chlorosulfonate groups in the electrolyte is at most 250 mmol per liter, preferably at most 200 mmol per liter and particularly preferably at most 100 mmol per liter.

4. Electrolyte according to any one of the preceding claims, **characterized in that** the electrolyte contains at least 1 mol SO₂, preferably at least 2 mol SO₂, further preferably at least 3 mol SO₂, even further preferably at least 4 mol SO₂ and particularly preferably at least 6 mol SO₂ per mole of conductive salt.

5. Electrolyte according to any one of the preceding claims, **characterized in that** the conductive salt is a Lewis acid/Lewis base adduct and that the electrolyte contains free Lewis base.

6. Electrolyte according to any one of the preceding claims, **characterized in that** the conductive salt is an aluminate, halogenide, oxalate, borate, phosphate, arsenate or gallate of an alkali metal, preferably of lithium, preferably a lithiumtetrahalogenoaluminate, particularly preferably lithiumtetrachloroaluminate.

7. Electrolyte according to any one of the preceding claims, **characterized in that** it contains, relative to the mole number of all salts dissolved in the electrolyte, at most 30 mol%, preferably at most 20 mol%, further preferably at most 10 mol% and particularly preferably at most 1 mol% of dissolved salt having a cation differing from the cation of the active metal.

8. Electrochemical battery cell containing an electrolyte according to any one of the preceding claims, a positive electrode and a negative electrode.

9. Battery cell according to claim 8, **characterized in that** the active metal is an alkali metal, an alkaline earth metal or a metal of group 12 of the periodic table or aluminum or preferably lithium, sodium, calcium, or zinc.

10. Battery cell according to one of claims 8 or 9, **characterized in that** the negative electrode is an insertion electrode and preferably contains carbon.

11. Battery cell according to any one of the preceding claims, **characterized in that** the positive electrode contains a metal compound, preferably a metal oxide or a metal halogenide or a metal phosphate, said metal preferably being a transition metal of the atomic numbers 22 to 28, in particular cobalt, nickel, manganese or iron, wherein the positive electrode preferably contains an intercalation compound which preferably contains lithium iron phosphate.

12. Process for producing an electrolyte according to any one of the claims 1 to 8, wherein
a Lewis acid, a Lewis base and aluminum are mixed, and
the mixture is heated for a minimum period of 6 hours to a temperature above a minimum temperature, the minimum temperature being at least 200 °C and being above the melting point of the mixture, whereby an adduct of the Lewis acid and the Lewis base is formed.

13. Process according to claim 12, **characterized in that** the minimum temperature is 250 °C, preferably 300 °C, further preferably 350 °C, further preferably 400 °C, further preferably 450 °C and particularly preferably 500 °C.

14. Process according to any one of claims 12 or 13, **characterized in that** the minimum period is 12 hours, preferably 18 hours, further preferably 24 hours, further preferably 48 hours and particularly preferably 72 hours.

15. Process according to any one of claims 12 to 14, **characterized in that** the mixture contains at least 40 mmol, preferably at least 200 mmol and particularly preferably at least 400 mmol of aluminum for each mole of Lewis acid.

## Revendications

1. Électrolyte pour cellule de batterie électrochimique, contenant du dioxyde de soufre et un sel conducteur, **caractérisé en ce que**
la concentration molaire de groupes hydroxyde dans l'électrolyte atteint au maximum 50 mmol par litre, et
la concentration molaire de groupes chlorosulfonate dans l'électrolyte atteint au maximum 350 mmol par litre.

2. Électrolyte selon la revendication 1, **caractérisé en ce que** la concentration molaire de groupes hydroxyde dans l'électrolyte atteint au maximum 45 mmol par litre, de préférence au maximum 25 mmol par litre, plus préférablement au maximum 15 mmol par litre et de manière particulièrement préférée au maximum 5 mmol par litre.

3. Électrolyte selon la revendication 1, **caractérisé en ce que** la concentration molaire de groupes chlorosulfonate dans l'électrolyte atteint au maximum 250 mmol par litre, de préférence au maximum 200 mmol par litre et de manière particulièrement préférée au maximum 100 mmol par litre.

4. Électrolyte selon l'une des revendications précédentes, **caractérisé en ce que** l'électrolyte contient au moins 1 mole de SO₂, de préférence au moins 2 moles de SO₂, plus préférablement au moins 3 moles de SO₂, encore plus préférablement au moins 4 moles de SO₂ et de manière particulièrement préférée au moins 6 moles de SO₂ par mole de sel conducteur.

5. Électrolyte selon l'une des revendications précédentes, **caractérisé en ce que** le sel conducteur est un adduit d'acide de Lewis/base de Lewis et l'électrolyte contient une base de Lewis libre.

6. Électrolyte selon l'une des revendications précédentes, **caractérisé en ce que** le sel conducteur est un aluminate, un halogénure, un oxalate, un borate, un phosphate, un arséniate ou un gallate d'un métal alcalin, en particulier de lithium, de préférence un tétrahalogénoaluminate de lithium, de manière particulièrement préférée le tétrachloroaluminate de lithium.

7. Électrolyte selon l'une des revendications précédentes, **caractérisé en ce qu'**il contient, rapporté à la quantité de matière de tous les sels dissous dans l'électrolyte, au maximum 30 % en moles, de préférence au maximum 20 % en moles, plus préférablement au maximum 10 % en moles et de manière particulièrement préférée au maximum 1 % en moles de sel dissous avec un cation différent du cation du métal actif.

8. Cellule de batterie électrochimique, contenant un électrolyte selon l'une des revendications précédentes, une électrode positive et une électrode négative.

9. Cellule de batterie selon la revendication 8, **caractérisée en ce que** le métal actif est un métal alcalin, un métal alcalino-terreux ou un métal du Groupe 12 du tableau périodique ou l'aluminium ou de préférence le lithium, le sodium, le calcium ou le zinc.

10. Cellule de batterie selon la revendication 8 ou la revendication 9, **caractérisée en ce que** l'électrode négative est une électrode d'insertion et contient de préférence du carbone.

11. Cellule de batterie selon l'une des revendications précédentes, **caractérisée en ce que** l'électrode positive contient un composé métallique, de préférence un oxyde métallique ou un halogénure métallique ou un phosphate métallique, dans laquelle le métal est de préférence un métal de transition des nombres atomiques 22 à 28, en particulier le cobalt, le nickel, le manganèse ou le fer, dans laquelle l'électrode positive contient de préférence un composé d'intercalation qui contient de préférence du phosphate de lithium et de fer.

12. Procédé pour la préparation d'un électrolyte selon l'une des revendications 1 à 8, dans lequel
un acide de Lewis, une base de Lewis et de l'aluminium sont mélangés, et le mélange est chauffé pendant une durée minimale de 6 heures à une température au-dessus d'une température minimale qui atteint au moins 200 °C et se situe au-dessus du point de fusion du mélange, dans lequel un adduit de l'acide de Lewis et de la base de Lewis se forme.

13. Procédé selon la revendication 12, **caractérisé en ce que** la température minimale atteint 250 °C, de préférence 300 °C, plus préférablement 350 °C, plus préférablement 400 °C, plus préférablement 450 °C et de manière particulièrement préférée 500 °C.

14. Procédé selon l'une des revendications 12 ou 13, **caractérisé en ce que** la durée minimale atteint 12 heures, de préférence 18 heures, plus préférablement 24 heures, plus préférablement 48 heures et de manière particulièrement préférée 72 heures.

15. Procédé selon l'une des revendications 12 à 14, **caractérisé en ce que** le mélange contient, par mole d'acide de Lewis, au moins 40 mmol, de préférence au moins 200 mmol et de manière particulièrement préférée au moins 400 mmol d'aluminium.
